# EUROPEAN PATENT APPLICATION

(11) **EP 4 712 676 A1**
(43) Date of publication of application: **18.03.2026**
(21) Application number: 24872685.3
(22) Date of filing: 18.07.2024
(51) Int. Cl.: H04W 76/16, H04W 76/22, H04W 76/18, H04W 8/18, H04W 88/06

(54) **METHOD AND DEVICE FOR CONTROLLING 5G NSA CAPABILITY IN WIRELESS COMMUNICATION SYSTEM**

(30) Priority: 25.09.2023 KR 20230128011
(71) Applicant: Samsung Electronics Co., Ltd., Suwon-si, Gyeonggi-do 16677 (KR)
(72) Inventor: NGUYEN, Duc Doan, Bac Tu Liem, Hanoi 124000 (VN); TRUONG, Van Hau, Bac Tu Liem, Hanoi 124000 (VN); NGUYEN, Van Hung, Bac Tu Liem, Hanoi 124000 (VN); HOANG, Minh Duc, Bac Tu Liem, Hanoi 124000 (VN); NGUYEN, The Thoi, Bac Tu Liem, Hanoi 124000 (VN); NGUYEN, Van Thinh, Bac Tu Liem, Hanoi 124000 (VN)
(74) Representative: Nederlandsch Octrooibureau
(86) International application number: PCT/KR2024/010378
(87) International publication number: WO 2025/070975

(57) **Abstract**

The present disclosure relates to a 5G or 6G communication system for supporting a higher data transmission rate. According to various embodiments of the disclosure, there is provided a method of a terminal including a plurality of SIMs in a wireless communication system, the method including: based on a type of a SIM used for a current communication service of the terminal, determining whether to enable a dual connectivity feature of the terminal; and transmitting information on whether to enable the dual connectivity feature to a base station, wherein the terminal and the base station are configured to support the dual connectivity feature, wherein the plurality of SIMs include a first SIM and a second SIM, and the first SIM and the second SIM include different subscription information.

## Description

### [Technical Field]

The disclosure relates to a wireless communication or mobile communication system, and for example, to a method and an apparatus for controlling a 5^{th} generation (5G) non-standalone (NSA) capability of a terminal in a wireless communication or mobile communication system.

### [Background Art]

Efforts to develop enhanced 5^{th} generation (5G) communication systems or pre-5G communication systems have been ongoing in order to meet the increasing demand for wireless data traffic since 4^{th} generation (4G) communication systems were commercialized. For this reason, 5G communication systems or pre-5G communication systems are called Beyond 4G network communication systems or post long term evolution (LTE) systems.

A 5G communication system is considered to be implemented in a superhigh frequency (mmWave) band (for example, a 60 GHz band) to achieve a high data transmission rate. For 5G communication systems, technologies for beamforming, massive multiple-input multiple-output (MIMO), full dimensional MIMO (FD-MIMO), array antenna, analog beamforming, and large scale antenna are being discussed to mitigate a path loss of radio waves and to increase a transmission distance of radio waves in a superhigh frequency band.

In addition, technologies for evolved small cells, advanced small cells, cloud ratio access network (RAN), ultra-dense network, device to device communication (D2D), wireless backhaul, moving network, cooperative communication, coordinated multi-points (CoMP), and interference cancellation in 5G communication systems are developing to enhance networks of systems.

In addition, hybrid frequency shift keying and quadrature amplitude modulation (FQAM) and sliding window superposition coding (SWSC), which are advanced coding modulation (ACM) schemes, and filter bank multi carrier (FBMC), non-orthogonal multiple access (NOMA), and sparse code multiple access (SCMA) which are enhanced access technology in 5G systems are developing. Thanks to the development of wireless communication systems as described above, it is possible to provide various services, and therefore, there is a demand for a solution for smoothy providing such services.

To meet the demand for wireless data traffic, 5G systems, new radio or next radio (NR) are commercialized, and services of high data transmission rates are provided to users through 4G systems or 5G systems, and wireless communication services having various purposes, such as Internet of things (IoT) and services requiring high reliability for a specific purpose, are expected to be provided. In current systems in which a 4G communication system and a 5G system are mixed, the open radio access network (O-RAN) established by operators and equipment providers defines a new network element (NE) and interface standards based on existing 3GPP standards, and proposes an O-RAN structure.

Recent terminals may support dual connectivity to connect not only to an existing 4G network but also to a 5G (or NR) network. If a terminal has difficulty in receiving a service only through a 5G network, dual connectivity may enable a 5G network and an existing 4G network to complement each other and to provide a communication service.

However, if a terminal does not need to receive a service (for example, 5G mobile communication) from a 5G network but is connected to the 5G network, the terminal may have a problem of waste of a battery since it performs a procedure to connect to the 5G network. Accordingly, there is a need for a technology for controlling to maintain connection only with an existing 4G network if a terminal does not need to connect to a 5G network.

### [Disclosure of Invention]

### [Technical Problem]

Embodiments of the disclosure provide an apparatus and a method for saving a battery by controlling dual connectivity of a terminal in a wireless communication system (or a mobile communication system).

For example, embodiments of the disclosure may disable dual connectivity of a terminal when the terminal connected to a 4G network does not need to connect to a 5G network in a wireless communication system. Embodiments of the disclosure provide a method for controlling evolved universal mobile telecommunications system (UMTS) terrestrial radio access (E-UTRA)-new radio (NR) dual connectivity (ENDC) of a terminal when the terminal does not need to receive a service from a 5G network in a 5G non-standalone (NSA) communication system.

### [Solution to Problem]

According to various example embodiments of the disclosure, there is provided a method of operating a terminal including a plurality of subscriber identification modules (SIMs) in a wireless communication system, the method including: based on a type of a SIM used for a current communication service of the terminal, determining whether to enable a dual connectivity feature of the terminal; and transmitting information on whether to enable the dual connectivity feature to a base station, wherein the terminal and the base station are configurd to support the dual connectivity feature, wherein the plurality of SIMs include a first SIM and a second SIM, and the first SIM and the second SIM include different subscription information.

According to various example embodiments of the disclosure, there is provided a terminal including a plurality of subscriber identification modules (SIMs) in a wireless communication system, the terminal including: a transceiver; a first SIM; a second SIM; and at least one processor, comprising processing circuitry, coupled with the transceiver, the first SIM, and the second SIM, wherein at least one processor, individually and/or collectively, is configured to: based on a type of a SIM used for a current communication service of the terminal, determine whether to enable a dual connectivity feature of the terminal; and control the terminal to transmit information on whether to enable the dual connectivity feature to a base station, wherein the terminal and the base station support the dual connectivity feature, wherein the plurality of SIMs include the first SIM and the second SIM, and the first SIM and the second SIM include different subscription information.

### [Advantageous Effects of Invention]

An apparatus and a method according to various example embodiments of the disclosure, may disable dual connectivity of the terminal when the terminal does not need to receive a service from a 5G network. In addition, when the terminal disables dual connectivity, the terminal may not receive configuration information for connecting to the 5G network from the 5G network. Accordingly, the terminal does not perform a procedure for connecting to the 5G network, so that power consumption is reduced. In addition, an overhead of signaling necessary for connection to the 5G network may be reduced.

The effects achieved by the disclosure are not limited to those mentioned above, and other effects that are not mentioned above may be clearly understood to those skilled in the art based on the description provided below.

### [Brief Description of Drawings]

FIG. 1 is a diagram illustrating an example wireless communication system according to various embodiments;
FIG. 2 is a block diagram illustrating an example configuration of a base station in a wireless communication system according to various embodiments;
FIG. 3 is a block diagram illustrating an example configuration of a terminal in a wireless communication system according to various embodiments;
FIG. 4 is a diagram illustrating a structure of 5G non-standalone (NSA) related to various embodiments of the disclosure;
FIG. 5 is a signal flow diagram illustrating an example procedure to connect to a 5G network related to various embodiments;
FIG. 6 is a signal flow diagram illustrating example operations between a terminal and a base station according to various embodiments;
FIG. 7 is a flowchart illustrating an example procedure for controlling EN-DC of a terminal according to various embodiments;
FIG. 8 is a flowchart illustrating an example procedure for controlling EN-DC of a terminal according to various embodiments;
FIG. 9 is a diagram illustrating an example of a database according to various embodiments;
FIG. 10 is a signal flow diagram illustrating an example procedure for updating an EN-DC state of a terminal according to various embodiments;
FIG. 11 is a flowchart illustrating an example procedure for controlling EN-DC of a terminal according to various embodiments;
FIG. 12 is a signal flow diagram illustrating example operations between a terminal and a base station according to various embodiments;
FIG. 13 is a flowchart illustrating an example procedure for controlling EN-DC of a terminal according to various embodiments;
FIG. 14 is a signal flow diagram illustrating example operations between a terminal and a base station according to various embodiments; and
FIG. 15 is a flowchart illustrating example operations of a terminal according to various embodiments.

### [Mode for the Invention]

Terms used in the disclosure are used to describe various example embodiments and are not intended to limit the scope of the disclosure. The terms of a singular form may include plural forms unless otherwise specified. Terms used herein, which include technical or scientific terms, may have the same meanings that are generally understood by a person skilled in the art. It will be further understood that terms, which are defined in a dictionary, may be interpreted as having the same or similar meanings as or to contextual meanings of the relevant technology and not in an idealized or overly formal way, unless expressly so defined herein in the disclosure. In some cases, even if the terms are terms which are defined in the specification, they should not be interpreted as excluding embodiments of the present disclosure.

In various embodiments of the disclosure described below, hardware-wise approach methods will be described by way of an example. However, various embodiments of the disclosure include technology using both hardware and software, and thus do not exclude software-based approach methods.

As used herein, terms indicating signals (for example, a message, information, a preamble, a signal, signaling, a sequence, a stream), terms indicating resources (for example, a symbol, a slot, a subframe, a radio frame, a subcarrier, a resource element (RE), a resource block (RB), a bandwidth part (BWP), an occasion), terms indicating calculation states (for example, a step, an operation, a procedure), terms indicating data (for example, information, a bit, a symbol, a codeword), terms indicating channels, terms indicating control information (for example, downlink control information (DCI), a medium access control (MAC) control element (CE), radio resource control (RRC) signaling), terms indicating network entities, terms indicating components of a device are merely examples for the convenience of explanation. Accordingly, the disclosure is not limited to terms described below, and other terms having the same or similar technical meanings may be used.

In the following descriptions, a physical channel and a signal may be interchangeably used with data or a control signal. For example, a physical downlink shared channel (PDSCH) is a term indicating a physical channel through which data is transmitted, but the term PDSCH may be used to indicate data. That is, in the disclosure, the expression 'transmitting a physical channel' may be interpreted as being the same as the expression 'transmitting data or a signal through a physical channel'.

In the disclosure, "higher signaling" refers to a signal transmission method in which a base station transmits a signal to a terminal using a downlink data channel of a physical layer, or a terminal transmits a signal to a base station using an uplink data channel of a physical layer. The higher signaling may be understood as radio resource control (RRC) signaling or a media access control (MAC) control element (CE).

In addition, in the disclosure, the expression "exceeding" or "being less than" may be used to determine whether a specific condition is satisfied, fulfilled, but these are just for expressing one example and do not exclude the expression "being greater than or equal to" or "being less than or equal to". The condition expressed by "being greater than or equal to" may be substituted with "exceeding", the condition expressed by "being less than or equal to" may be substituted with "being less than", and the condition expressed by "being greater than or equal to and less than" may be substituted with "exceeding and less than or equal to".

In addition, various embodiments will be described using terms used in various communication standards (for example, 3^{rd} generation partnership project (3GPP)), but these are merely an example for explanation. Various embodiments of the disclosure may be easily modified and applied to other communication systems.

Meanwhile, a universal integrated circuit card (UICC) in a wireless communication system may be a smart card which is inserted into a mobile communication terminal and used, and the UICC may include an access control module for accessing a network of a mobile communication provider. According to various embodiments, examples of the access control module may be a universal subscriber identity module (USIM), a subscriber identity module (SIM), an IP multimedia service identity module (ISIM), but are not limited thereto. The UICC may be called a UICC card, a USIM card, or a SIM card, and typically, may be called a SIM card. The UICC may store private information of a mobile communication subscriber and may authenticate a subscriber and generate a traffic security key when the UICC accesses a mobile communication network, thereby enabling safe use of mobile communication.

Due to the spread of Internet of things (IoT) field, embedded UICCs (eUICCs) are applied to various terminals, such as wearable devices, cars, smart meters. The eUICC may refer to a UICC card which downloads SIM modules and selects a SIM module. That is, the eUICC may include a UICC card which is embedded in a terminal or is not embedded among UICC cards which download SIM modules remotely and select a SIM module.

In the detailed descriptions presented below, terms such as a SIM card or a SIM may be used to indicate a UICC card, a USIM card, a UICC including an ISIM. In other words, technical application to a SIM card may be equally applied to a USIM card, an ISIM card, or a typical UICC card. According to various embodiments, the SIM card may store private information of a mobile communication subscriber, and may authenticate a subscriber and generate a traffic security key when the SIM card accesses a mobile communication network, thereby enabling safe use of mobile communication. In addition, in various embodiments, the SIM card may be manufactured as a dedicated card for a corresponding mobile communication provider according to a request of the specific mobile communication provider when the SIM card is manufactured, and authentication information for accessing a network of the corresponding communication provider, for example, a universal subscriber identity module (USIM) application and an international mobile subscriber identity (IMSI), a subscriber key (K) value, an operator constant (OPc) value, may be loaded into the SIM card in advance, and the SIM card may be released.

A subscriber may insert a UICC card into his/her own mobile communication terminal to use a network of a mobile communication provider and an application service, and, when the terminal is replaced, the subscriber may use authentication information, mobile communication phone numbers, a personal phone number list, which are stored in the UICC card, as they are, by moving the UICC card from the existing terminal and inserting the same into a new terminal. According to various embodiments, when a SIM module is remotely downloaded and installed in a UICC card, the SIM module of a mobile communication service that the user wants to use may be downloaded into the UICC card at a desired time. In various embodiments, a UICC card may have a plurality of SIM modules downloaded and installed therein, and may select and use only one SIM module. A UICC card may be embedded or not embedded in a terminal. In particular, a UICC embedded in a terminal and used may be referred to as an embedded UICC (eUICC).

UICC cards which are embedded or not embedded in terminals among UICC cards which download SIM modules remotely and select a SIM module may be referred to as eUICCs, and a remotely downloaded SIM module may be referred to as an eSIM. In addition, downloaded SIM module information may be referred to as an eUICC profile or an eSIM profile, a profile. In the detailed descriptions presented below, the terms "communication provider", "network operator" may be used as the same meaning as a service provider, a communication provider, a mobile communication provider. For the convenience of explanation, in the case of an eUICC, terms and names defined in GSMA standards may be used. However, the disclosure is not limited to the terms and the names described above, and may be equally applied to systems following other standards.

The disclosure described hereinbelow relates to a method and an apparatus for supporting various services in a wireless communication system. For example, the disclosure relates to a technology for controlling a dual connectivity (DC) function of a terminal according to a type of subscription information when one terminal has a plurality of pieces of subscription information in a wireless communication system. One terminal having a plurality of pieces of subscription information may refer, for example, to one terminal having two or more subscription identity modules (SIMs) storing subscription information, and each of the SIMs may be contained in a physical card (for example, a UICC), may be implemented in the form of software, or may be implemented by a combination of the two methods. In describing embodiments of the disclosure, terms "subscription information" and "SIM" may be used as having the same or similar meaning. In addition, a terminal including two SIMs storing two pieces of subscription information, respectively, may be referred to as a terminal supporting a dual SIM.

Hereinafter, the disclosure will be described based on a terminal supporting a dual SIM (for example, a terminal including two different types of SIMs). Of course, embodiments described hereinbelow are not limited to a terminal supporting a dual SIM, and may be applied to a terminal including SIMs storing three or more pieces of subscription information, respectively.

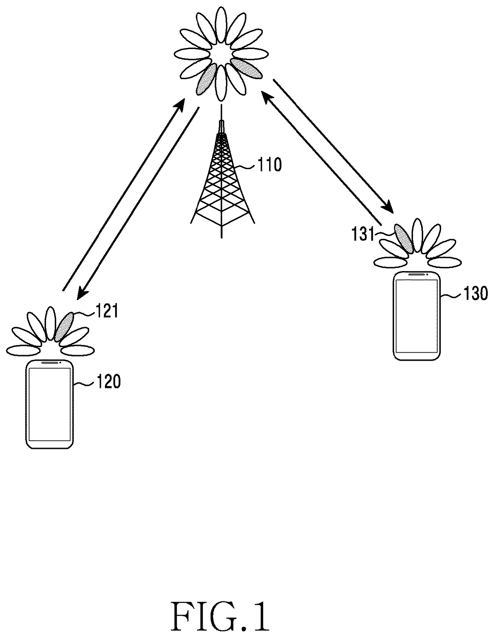

FIG. 1 is a diagram illustrating an example wireless communication system according to various embodiments. FIG. 1 illustrates a base station 110, a terminal 120, a terminal 130 as part of nodes using a wireless channel in a wireless communication system. Although FIG. 1 illustrates only one base station, other base stations which are the same as or similar to the base station 110 may further be included. In addition, in embodiments of the disclosure, the base station 110 may indicate at least one of an LTE base station or a 5G base station.

The base station 110 may be a network infrastructure that provides radio access to terminals 120, 130. The base station 110 may have a coverage that is defined as a predetermined geographical region based on a distance by which it transmits a signal. The base station 110 may be referred to as "access point (AP)," "eNodeB (eNB)," "5^{th} generation (5G) node," "next generation node B (gNB)," "wireless point," "transmission/reception point (TRP)," or other terms having the same technical meaning as the above-mentioned terms, in addition to the base station.

Each of the terminal 120 and the terminal 130 is a device that is used by a user, and may perform communication with the base station 110 through a wireless channel. A link that is oriented from the base station 110 to the terminal 120 or the terminal 130 may be referred to as a downlink (DL), and a link that is oriented from the terminal 120 or the terminal 130 to the base station 110 may be referred to as an uplink (UL). The terminal 120 and the terminal 130 may perform communication with each other through a wireless channel although this is not illustrated in FIG. 1. In this case, a link between the terminal 120 and the terminal 130 (device-to-device link; D2D) may be referred to as a side link, and the side link may be interchangeably used with a PC5 interface. In some cases, at least one of the terminal 120 and the terminal 130 may be operated without user's intervention. That is, at least one of the terminal 120 and the terminal 130 may be a device which performs machine type communication (MTC), and may not be carried by a user. Each of the terminal 120 and the terminal 130 may be referred to as "user equipment (UE)," "mobile station," "subscriber station," "remote terminal," "wireless terminal," "user device", or other terms having the same technical meaning as the above-mentioned terms, in addition to the terminal.

The base station 110, the terminal 120, the terminal 130 may transmit and receive wireless signals in millimeter wave (mmWave) bands (for example, 28 GHz, 30 GHz, 38 GHz, 60 GHz). In this case, to enhance a channel gain, the base station 110, the terminal 120, the terminal 130 may perform beamforming. Beamforming may include transmission beamforming and reception beamforming. That is, the base station 110, the terminal 120, the terminal 130 may give directivity to a transmission signal or a reception signal. To achieve this, the base station 110 and the terminals 120, 130 may select serving beams 121, 131 through a beam search or beam management procedure. After serving beams 121, 131 are selected, communication may be performed through resources having a quasi co-located (QCL) relationship with resources through which serving beams 121, 131 are transmitted.

If large-scale characteristics of a channel through which a symbol on a first antenna port is transmitted can be inferred from a channel through which a symbol on a second antenna port is transmitted, the first antenna port and the second antenna port may be evaluated as having a QCL relationship. For example, the large-scale characteristics may include at least one of delay spread, doppler spread, doppler shift, an average gain, an average delay, a spatial receiver parameter.

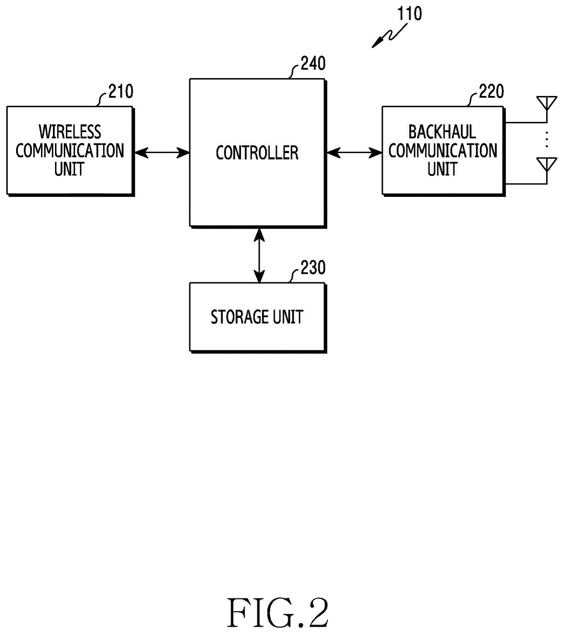

FIG. 2 is a block diagram illustrating an example configuration of a base station in a wireless communication system according to various embodiments. The configuration illustrated in FIG. 2 may be understood as a configuration of the base station 110. The term "unit" or terms ending with suffixes "-er," and "-or" used in the following descriptions refer to a unit processing at least one function or operation, and may be implemented by hardware, software, or a combination of hardware and software. Referring to FIG. 2, the base station may include a wireless communication unit (e.g., including communication circuitry) 210, a backhaul communication unit (e.g., including circuitry) 220, a storage unit (e.g., including a memory) 230, and a controller (e.g., including processing circuitry) 240.

The wireless communication unit 210 may include various communication circuitry and performs functions for transmitting and receiving signals via a wireless channel. For example, the wireless communication unit 210 may perform a function of converting between a baseband signal and a bit stream according to a physical layer standard of a system. For example, when transmitting data, the wireless communication unit 210 may generate complex symbols by encoding and modulating a transmission bit stream. In addition, when receiving data, the wireless communication unit 210 may reconstruct a reception bit stream by demodulating and decoding a baseband signal.

In addition, the wireless communication unit 210 may up-convert a baseband signal into a radio frequency (RF) band signal, and then may transmit the signal via an antenna, and may down-convert an RF band signal received via an antenna into a baseband signal. To achieve this, the wireless communication unit 210 may include a transmission filter, a reception filter, an amplifier, a mixer, an oscillator, a digital to analog converter (DAC), an analog to digital converter (ADC), etc. In addition, the wireless communication unit 1201 may include a plurality of transmission and reception paths. Furthermore, the wireless communication unit 210 may include at least one antenna array including a plurality of antenna elements.

In a hardware aspect, the wireless communication unit 210 may be configured by a digital unit and an analog unit, and the analog unit may be configured by a plurality of subunits according to operating power, an operating frequency, etc. The digital unit may be implemented by at least one processor (for example, a digital signal processor (DSP)).

The wireless communication unit 210 may transmit and receive signals as described above. Accordingly, an entirety or a part of the wireless communication unit 210 may be referred to as a "transmitter," a "receiver," or a "transceiver." In addition, in the following descriptions, transmitting and receiving via a wireless channel may include processing by the wireless communication unit 1201 as described above.

The backhaul communication unit 220 may include various circuitry and provides an interface for communicating with other nodes in a network. That is, the backhaul communication unit 220 may convert a bit stream to be transmitted from the base station to another node, for example, another access node, another base station, a higher node, a core network, or the like, into a physical signal, and may convert a physical signal transmitted from another node into a bit stream.

The storage unit 230 may include a memory and store data such as a basic program for operations of the base station, an application program, configuration information, etc. The storage unit 230 may be configured by a volatile memory, a nonvolatile memory, or a combination of a volatile memory and a nonvolatile memory. In addition, the storage unit 230 provides stored data according to a request of the controller 230.

The controller 240 may include a processor including various processing circuitry and controls overall operations of the base station. For example, the controller 240 may transmit and receive signals via the wireless communication unit 210 or the backhaul communication unit 220. In addition, the controller 240 may write and read out data on and from the storage unit 230. In addition, the controller 240 may perform functions of a protocol stack required by communication standards. According to another implementation example, the protocol stack may be included in the wireless communication unit 210. To achieve this, the controller 240 may include at least one processor. According to various embodiments of the disclosure, the controller 240 may control the base station to perform operations according to various embodiments, which will be described below. For example, the controller 240 may control to provide configuration information for a measurement report of a terminal in order for the terminal supporting a dual connectivity function to perform a procedure for connecting to a 5G base station. In addition, the controller 240 may control to provide configuration information for a terminal to connect to the base station to the terminal, based on a measurement report received from the terminal. Further, the processor may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

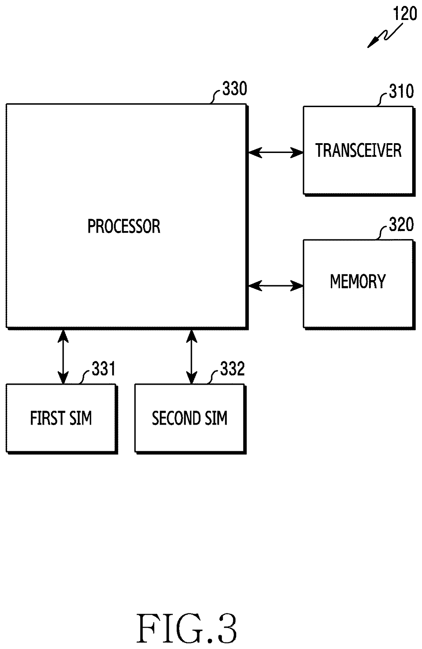

FIG. 3 is a block diagram illustrating an example configuration of a terminal in a wireless communication system according to various embodiments. The configuration illustrated in FIG. 3 may be understood as a configuration of the terminal 120. The term "unit" or terms ending with suffixes "-er," and "-or" used in the following description refer to a unit processing at least one function or operation, and may be implemented by hardware, software, or a combination of hardware and software. Referring to FIG. 3, the terminal 120 may include a transceiver (e.g., including circuitry) 310, a memory 320, a processor (e.g., including processing circuitry) 330, a first SIM 331, and a second SIM 332. The transceiver 310, the memory 320, the processor 330, the first SIM 331, and the second SIM 332 of the terminal 120 may operate according to a communication method of the terminal, which will be described below. However, the components of the terminal 120 are not limited to the above-described example. For example, the terminal 120 may include more components or fewer components than the above-described components. For example, referring to FIG. 3, only the first SIM 331 and the second SIM 332 are disclosed, but this should not be considered as limiting. N SIMs (not shown) may further be included. In addition, the processor 330, the transceiver 310, and the memory 320 may be implemented in the form of one chip.

The transceiver 310 may include various circuitry and refers to a receiver of the terminal and a transmitter of the terminal, and may transceive signals with a base station. A signal transceived with a base station may include control information and data. To achieve this, the transceiver 310 may include an RF transmitter to up-convert a frequency of a transmitted signal and amplify a signal, and an RF receiver to low-noise amplify a received signal and down-convert a frequency. However, this is merely an example of the transceiver 310 and components of the transceiver 310 are not limited to the RF transmitter and the RF receiver.

In addition, the transceiver 310 may receive a signal through a wireless channel, and may output the signal to the processor 330, and may transmit a signal outputted from the processor 330 through a wireless channel.

The memory 320 may store a program and data necessary for operations of the terminal 120. In addition, the memory 320 may store control information or data included in a signal acquired at the terminal 120. The memory 320 may be configured by a storage medium such as a read only memory (ROM), a random access memory (RAM), a hard disk, a compact-disk (CD)-ROM, and a digital versatile disc (DVD), or a combination of the storage media.

The processor 330 may include various processing circuitry and control a series of processes to operate the terminal 120 according to embodiments of the disclosure described above. The processor 330 may include at least one processor. For example, the processor 330 may include a communication processor (CP) to control communication, and an application processor (AP) to control a higher layer such as an application program. The processor 330 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The first SIM 331 and the second SIM 332 may be access control modules for accessing a network of a mobile communication provider. The processor 330 may perform a registration process at a predetermined network entity using the first SIM 331. In addition, the processor 330 may perform a registration process at a network entity using the second SIM 332.

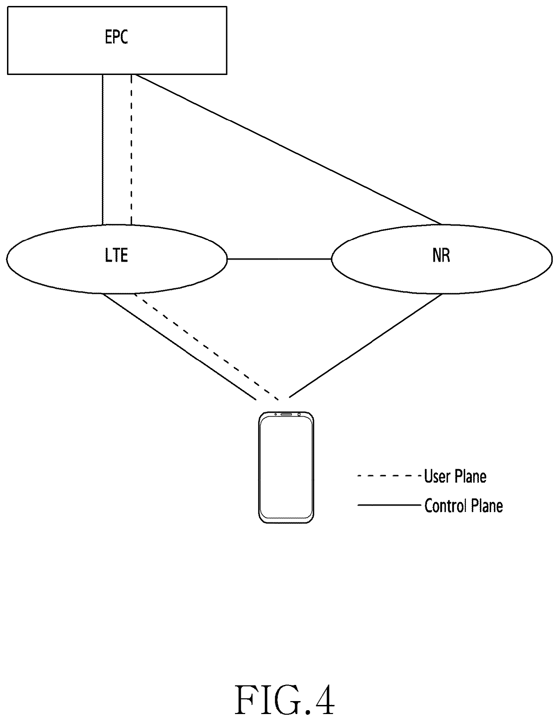

FIG. 4 is a diagram illustrating a structure of a 5G non-standalone (NSA) related to various embodiments.

Referring to FIG. 4, a 5G NSA network structure related to a terminal providing a dual connectivity function will be described. For example, in the disclosure, a terminal may refer to a terminal that provides a 5G NSA function to be able to connect not only to a 4G network but also to a 5G network. In this case, dual connectivity may be a technology for enabling an LTE base station to perform control processing with respect to a terminal as a master base station, and enabling a terminal to enhance a transmission speed through a 5G base station. In addition, dual connectivity may refer to a technology for connecting an LTE base station and a 5G base station to a core network (for example, an evolved packet core (EPC)) of a 4G network. That is, when one terminal connects to an LTE base station and a 5G base station in a mobile communication network simultaneously, and exchanges data with the respective base stations simultaneously, the LTE base station may process control as a master base station, and the 5G base station may only enhance a data transmission speed, and the two base stations connect only to the EPC which is an LTE core network without using a 5G core network (5GC).

In dual connectivity, a base station which provides a macro cell coverage may serve as a master base station (for example, an eNB) to process both a control plane and a user plane. Another base station (for example, an eNB or gNB) that has a small cell coverage may be referred to as a secondary base station, and may perform an assistance role to process only a user plane. That is, a master base station may process control signaling, whereas a secondary base station may be used to enhance a data transmission speed. In a 5G communication system, both a low frequency band (410 MHz to 7125 MHz bands) and a high frequency band (24.25 GHz to 52.6 GHz) may be used and the coverage of a base station may be diversified, and thus, services combining merits and demerits of a macro cell and a small cell become very important. In addition, dual connectivity (for example, multi-radio dual connectivity (MR-DC)) which is based on two different radio resources while using NR which is a radio access technology of 5G and E-UTRA which is a radio access technology of LTE may perform an important role.

E-UTRA-NR dual connectivity (hereinafter, EN-DC or ENDC) may be one of multi-radio dual connectivity (MR-DC) types. In EN-DC, both an LTE base station which provide E-UTRA, and a 5G base station connect to an EPC which is an LTE core network, and may not use a 5GC. A control plane may be processed at the LTE base station, and a user plane may be processed at the LTE base station and the 5G base station. In particular, EN-DC may be a technology that is used in a 5G NSA network structure. In embodiments of the disclosure described hereinbelow, a 5G base station may refer to a 5G NSA base station supporting EN-DC. That is, in the disclosure, a 5G base station, a 5G NSA base station, or a 5G NSA cell may be used as the same meaning.

Hereinafter, various example embodiments of the disclosure will be described based on dual connectivity (for example, EN-DC) which is used in a 5G NSA network structure. Of course, a communication network structure and a dual connectivity method in embodiments of the disclosure are not limited to the above-described example.

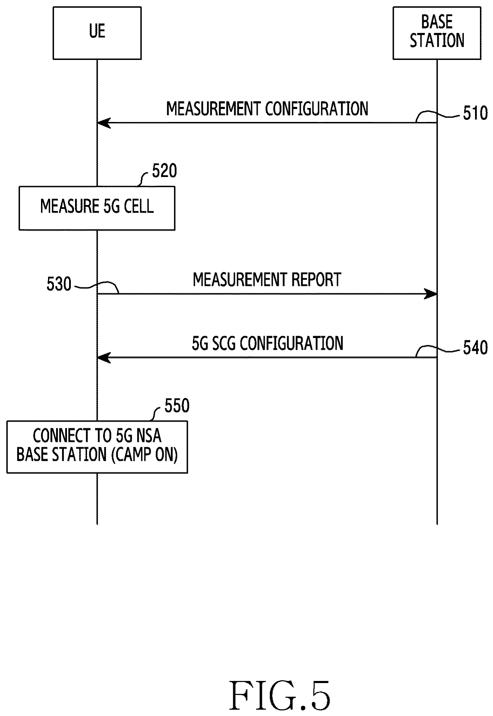

FIG. 5 is a signal flow diagram illustrating an example procedure for connecting to a 5G network which is related to various embodiments.

Referring to FIG. 5, a measurement report and a connection procedure between UE and a base station (for example, an gNB) will be described. The UE may establish radio resource control (RRC) connection with the base station. In addition, the UE may be in an RRC connection mode RRC _CONNECTED.

At step 510, the base station may transmit a predetermined RRC message (for example, RRCResume or RRCReconfiguration) containing measurement configuration information to the UE. In an embodiment, the measurement configuration information may include report configuration information containing an event triggering condition (for example, EventA3, EventA4, EventA5, EventB1, or EventB2) for triggering a measurement report of the UE. In addition, the measurement configuration information may include information related to a measurement gap for the UE to measure surrounding cells.

At step 520, the UE may perform measurement on neighboring cells (for example, 5G NSA cells) based on the measurement configuration information received from the base station. For example, the UE may measure signal quality (for example, reference signal received power (RSRP), reference signal received quality (RSRQ)) of neighboring cells.

At step 530, the UE may transmit a measurement report including a result of measurement on neighboring cells to the base station. In this case, the measurement report may be caused by an event triggering condition included in the measurement configuration information of step 510. For example, the UE may report the result of measurement when a specific event occurs. In this case, it may be pre-defined which cell each event is targeted at. For example, there is an event that is targeted at a serving cell, a neighboring cell, a primary cell, a secondary cell, or a combination thereof. The measurement report may include at least one of signal quality of neighboring cells (for example, RSRP, RSRQ) measured by the UE at step 520, identifiers of neighboring cells.

At step 540, the base station may transmit, to the UE, configuration information for connecting the UE to a 5G base station (for example, a 5G secondary cell group (SCG)), based on the measurement report received from the UE.

At step 550, the UE may perform a procedure (camp-on) for connecting to a 5G base station, based on the configuration information received at step 540.

The operations of the UE and the base station described above are merely an example, and some of the above-described operations may be omitted or more than the above-described operations may be combined. In addition, at least one new operation other than the above-described operations may be added and may be organizationally coupled with existing operations.

Hereinafter, various example embodiments of the disclosure will be described based on the assumption that UE supports EN-DC and a dual SIM simultaneously. Of course, the disclosure is not limited to the above-described examples.

In an embodiment, UE supporting a dual SIM may include a default data SIM (DDS) stack (hereinafter, DDS) and a non-DDS stack (hereinafter, non-DDS). For example, the first SIM 331 of the UE may be a DDS, and the second SIM 332 may be a non-DDS. In this case, a stack may have the same meaning as a SIM. Accordingly, in the disclosure, the term "DDS" (including "non-DDS") may be used as having the same or similar meaning as a DDS stack or a default data stack. However, the DDS and the non-DDS may share one wireless transceiver (for example, the communication unit 310) in the UE. Accordingly, the wireless transceiver may perform only an operation of one SIM at a time. The DDS may be identified through a user input, and may be a SIM supporting all of (mobile) data (for example, mobile data provided by a 5G base station), a voice call (for example, voice over LTE (VoLTE) or voice over new radio (VoNR)), and a short message service (SMS). In embodiments of the disclosure described hereinbelow, mobile data may indicate wireless communication or mobile communication data which is serviced through a 5G base station. The non-DDS may be a SIM supporting a voice call and an SMS. However, unlike the DDS, the non-DDS may not support transmission and/or reception of mobile data. Accordingly, the first SIM 331 of the UE may be used for transmitting and/or receiving mobile data, but the second SIM 332 may not be used for transmitting and/or receiving mobile data. Of course, explanations of the UE described above are merely one example and are not limited.

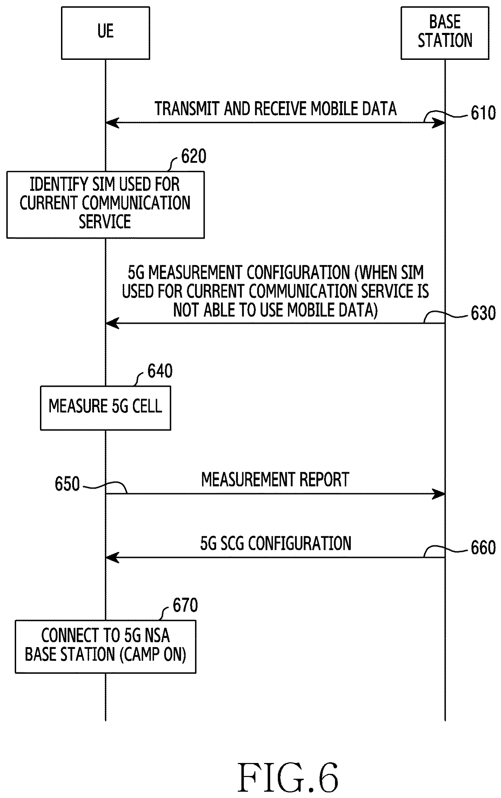

FIG. 6 is a signal flow diagram illustrating example operations between UE and a base station according to various embodiments.

Referring to FIG. 6, a procedure for connecting UE to a 5G base station regardless of whether UE supporting EN-DC uses mobile data is illustrated.

At step 610, a DDS of UE may transmit and/or receive mobile data to and/or from a base station. In this case, it may be difficult for a non-DDS of the UE to transmit and receive mobile data to and from the base station. For example, when the UE intends to transmit and/or receive mobile data to and/or from the base station, the UE may use the DDS. Accordingly, when the SIM that the UE is using to provide a current communication service is a non-DDS, the UE should change (switch) the SIM currently in use to a DDS to transmit and/or receive mobile data.

At step 620, the UE may identify the SIM which is used for the current communication service. For example, when the SIM used for the current communication service of the UE is a DDS, the UE may transmit and/or receive mobile data through the DDS in the same way as at step 610. However, when the SIM used for the current communication service of the UE is a non-DDS, the UE may not be able to transmit and/or receive mobile data through the non-DDS. Accordingly, when it is identified that the SIM used for the current communication service is the non-DDS, it may indicate that the UE is currently connected to a 4G base station. Therefore, the UE may not be able to use mobile data. Accordingly, the UE may need to perform a procedure for connecting to a 5G base station in order to use mobile data.

At step 630, the base station may transmit, to the UE, measurement configuration information for a measurement report of the UE on a 5G cell. For example, when the UE is not currently able to use mobile data, the base station may transmit measurement configuration information to the UE in order to connect to the UE (for example, EN-DC).

At step 640, the UE may perform measurement on a neighboring cell (for example, a 5G cell), based on the measurement configuration information received from the base station. For example, the UE may measure signal quality (for example, reference signal received power (RSRP), reference signal received quality (RSRQ)) of neighboring cells.

At step 650, the UE may transmit a measurement report including a result of measurement on neighboring cells to the base station. In this case, the measurement report may be caused by an event triggering condition included in the measurement configuration information of step 630. For example, the UE may report the result of measurement when a specific event occurs. In this case, it may be pre-defined which cell each event is targeted at. The measurement report may include signal quality of neighboring cells (for example, RSRP, RSRQ) measured by the UE at step 640, identifiers of neighboring cells.

At step 660, the base station may transmit, to the UE, configuration information for connecting the UE to a 5G base station (for example, a 5G SCG), based on the measurement report received from the UE.

At step 670, the UE may perform a procedure (camp-on) for connecting to the 5G base station, based on the configuration information received at step 660. The connection procedure (for example, steps S630 to S670) to the 5G base station in FIG. 6 may include the same or similar operations for the same purpose as the above-described operations (for example, steps S510 to S550) of FIG. 5.

The operations of the UE and the base station described above are merely an example, and some of the above-described operations may be omitted or more than the above-described operations may be combined. In addition, at least one new operation other than the above-described operations may be added and may be organizationally coupled with existing operations.

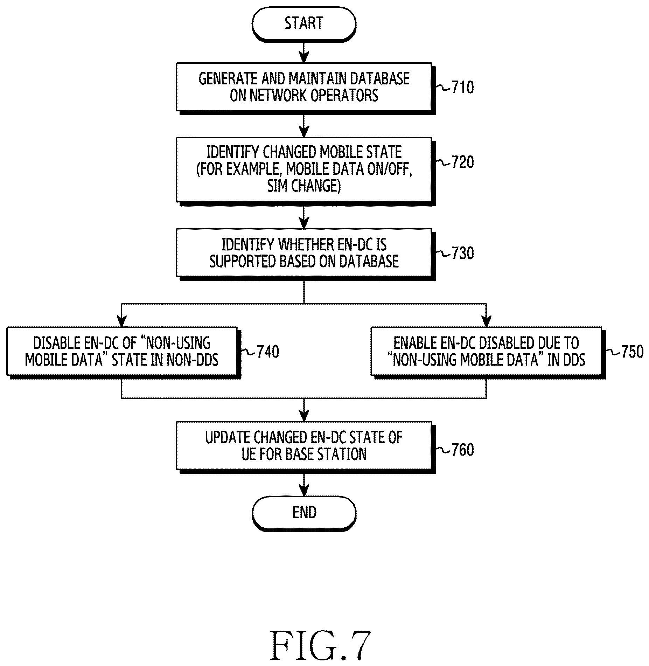

FIG. 7 is a flowchart illustrating an example procedure for controlling EN-DC of UE according to various embodiments.

Referring to FIG. 7, a method for controlling an EN-DC feature (or capability) of UE not to perform a procedure for connecting the UE to a 5G base station when the UE does not use mobile data will be described.

At step 710, UE may generate and maintain a database regarding network operators. For example, the UE may receive information on network operators (for example, communication service providers) from a base station. The UE may store the information on the network operators, which is received from the base station, and may generate a database based on the stored information. In addition, the UE may periodically or dynamically manage/maintain the generated database according to movement, a state of the UE (for example, power on/off). In this case, a network operator may be a base station operator which controls cells supporting EN-DC.

At step 720, the UE may identify (or determine) a changed mobile state. For example, a mobile state of the UE may be changed in at least one case of a case in which the use of mobile data of the UE is initiated (on) or terminated (off), a case in which a DDS is changed, and a case in which power of the UE is turned on or restarts. In this case, changing a DDS may refer to changing a DDS configuration for a user (or UE) to use Internet connection, and may be an operation of changing to another SIM. For example, when the UE uses mobile data in a first SIM, a user may change a DDS configuration to a second SIM. Thereafter, all the Internet data may be transmitted through the second SIM, and a data cost for the second SIM may be charged.

At step 730, the UE may identify (or determine) whether a specific network operator is able to support EN-DC, based on the database generated at step 710. For example, the UE may identify whether it is possible to connect to any one network (for example, a 5G base station) included in the database, based on information on at least one network operator supporting EN-DC. In this case, when it is identified that the specific network operator does not support EN-DC, based on the database, the UE may not perform the EN-DC control method of the UE according to the disclosure.

At step 740, when it is identified that the specific network operator supports EN-DC based on the database, the UE may disable EN-DC of a "non-using mobile data" state in the non-DDS. In this case, the "non-using mobile data" refers to a case in which mobile data cannot be used by the UE, and the "non-using mobile data" may cause a running SIM to be disabled. In addition, disabling any one SIM (for example, a DDS or a non-DDS) of UE may refer to changing/switching to the other SIM (for example, a non-DDS or DDS), or using only the other SIM (for example, a non-DDS or a DDS). For example, when the SIM used for a current communication service is the non-DDS and the UE does not use mobile data, the UE may disable EN-DC of the UE. Accordingly, the UE may not receive measurement configuration information for performing a measurement report on a 5G cell from the base station. Alternatively, the UE may not perform subsequent procedures (for example, at least one of steps 520 to 550 of FIG. 5) for connecting to a 5G base station even when receiving measurement configuration information for performing a measurement report on a 5G cell from the base station.

At step 750, the UE may enable EN-DC in the DDS. For example, when the SIM used for the current communication service of UE is the DDS, the UE may be able to use mobile data and thus may enable EN-DC which is in a disabled state. In this case, the EN-DC in the disabled state may indicate that the DDS is disabled due to the "non-using mobile data". However, when EN-DC of the UE is in an enabled state, the UE may omit step 750.

At step 760, the UE may update the state of the EN-DC feature (or capability) of the UE which is changed through step 740 or 750 for the base station. For example, when the EN-DC of the UE is disabled through step 740 or the state of the EN-DC of the UE is enabled through step 750, the UE may transmit information on the changed state of the EN-DC to the base station. In an embodiment, the information on the state of the EN-DC feature of the UE may be included in UE capability information that the UE transmits to the base station according to a request of the base station for UE capability information (for example, UE capability enquiry). Accordingly, the base station may determine whether to perform procedures for connecting the UE to a 5G base station, based on the changed EN-DC state of the UE. For example, when the EN-DC of the UE is disabled through step 740, the base station may identify (determine) that the UE does not need to connect to a 5G base station, and may not transmit measurement configuration information for a measurement report of the UE to the UE. Alternatively, when the EN-DC of the UE is enabled through step 750, the base station may identify (determine) that the UE needs to connect to a 5G base station, and may transmit measurement configuration information for a measurement report of the UE to the UE.

The operations of the UE and the base station described above are merely an example, and some of the above-described operations may be omitted or more than the above-described operations may be combined. In addition, at least one new operation other than the above-described operations may be added and may be organizationally coupled with existing operations.

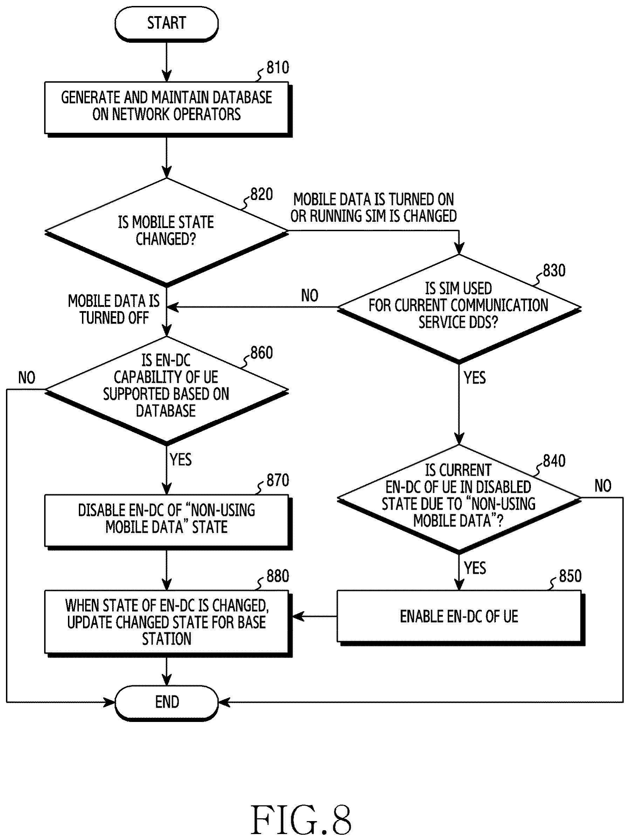

FIG. 8 is a flowchart illustrating an example procedure for controlling EN-DC of UE according to various embodiments.

Referring to FIG. 8, the sequence of operations of UE according to the embodiment of FIG. 7 described above will be described in detail according to change of mobile data and a type of SIM used for a current communication service of UE. However, an explanation of the same contents as described in FIGS. 7 and 8 may not be repeated here.

At step 810, UE may generate and maintain a database regarding network operators. For example, the UE may receive information on network operators (for example, communication service providers) from a base station. In this case, the information received from the base station may include at least information regarding whether each network operator is able to support EN-DC. The UE may store the information regarding the network operators, which is received from the base station, in a memory (or buffer), and may generate a database based on the stored information. For example, the UE may periodically or dynamically receive information regarding a new network operator. In this case, the information regarding the new network operator may include information of network operators regarding neighboring cells at a new position according to movement of the UE. Accordingly, the UE may update information on existing network operators, which is stored, based on information on new network operators. The above-described method for generating and maintaining the database is merely one example, and is not limited to the above-described example.

At step 820, the UE may identify (determine) whether a mobile state of the UE is changed. For example, the UE may identify whether a use state of mobile data of the UE is changed or a DDS is changed.

At step 830, when use of mobile data of the UE is initiated or a DDS is changed, it may be identified whether a SIM used for a current communication service of the UE is a DDS. For example, the UE may identify whether a running SIM is a DDS or a non-DDS.

At step 840, when the SIM used for the current communication service of the UE is the DDS, the UE may identify whether EN-DC of the UE is in a disabled state due to "non-using mobile data". In this case, the "non-using mobile data" is a case in which UE is not able to use mobile data, and the "non-using mobile data" may cause a running SIM to be disabled. For example, although the SIM used for the current communication service of the UE is the DDS, the UE may identify whether the EN-DC of the UE is in a disabled state since the UE does not use mobile data.

At step 850, when the current EN-DC of the UE is in the disabled state, the UE may enable the EN-DC of the UE. Accordingly, the UE may perform the EN-DC to connect to a 5G base station.

At step 860, when the mobile state is not changed at step 820 or the SIM used for the current communication service of the UE is a non-DDS at step 830, the UE may identify whether a specific network operator is able to support the EN-DC, based on the database generated at step 810. For example, the UE may identify whether it is possible to connect to any one network (for example, a 5G base station) included in the database, based on the information on at least one network operator supporting EN-DC. In this case, when it is identified that the specific network operator does not support the EN-DC, based on the database, the UE may not perform the EN-DC control method of the UE according to the disclosure.

At step 870, when it is identified that the specific network operator supports the EN-DC based on the database, the UE may disable the EN-DC in the "non-using mobile data" state. For example, when the SIM used for the current communication service is the non-DDS and the UE does not use mobile data, the UE may disable the EN-DC of the UE. Accordingly, the UE may not receive measurement configuration information for performing a measurement report on a 5G cell from the base station. The UE may not perform subsequent procedures (for example, at least one of steps 520 to 550 of FIG. 5) for connecting to the 5G base station even when receiving measurement configuration information for performing a measurement report on a 5G cell from the base station.

At step 880, the UE may update the state of the EN-DC feature (or capability) of the UE which is changed through step 850 or step 870 for the base station. For example, the UE may transmit, to the base station, information on the state of EN-DC which is changed when the EN-DC of the UE is disabled through step 870 or the state of the EN-DC is enabled through step 850. In an embodiment, the information on the state of the EN-DC feature of the UE may be included in UE capability information that the UE transmits to the base station according to a request of the base station for UE capability information (for example, a UE capability enquiry). Accordingly, the base station may determine whether to perform procedures for connecting the UE to the 5G base station, based on the changed EN-DC state of the UE. For example, when the EN-DC of the UE is disabled through step 870, the base station may identify (determine) that the UE does not need to connect to the 5G base station, and may not transmit measurement configuration information for a measurement report of the UE to the UE. Alternatively, when the EN-DC of the UE is enabled through step 850, the base station may identify (determine) that the UE needs to connect to the 5G base station, and may transmit measurement configuration information for a measurement report of the UE to the UE.

The operations of the UE and the base station described above are merely an example, and some of the above-described operations may be omitted or more than the above-described operations may be combined. In addition, at least one new operation other than the above-described operations may be added and may be organizationally coupled with existing operations.

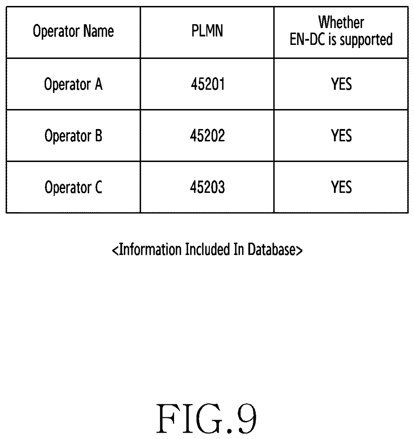

FIG. 9 is a diagram illustrating an example of a database according to various embodiments.

Referring to FIG. 9, information included in the database of step 710 or 810 described above will be described. For example, information on network operators (for example, communication service operators) that UE receives from a base station may include at least one of a name of a network operator, a public land mobile network (PLMN), or information on whether EN-DC is supported. Of course, the above-described configuration of the database is merely one example and is not limited to the above-described example. Accordingly, the database may include only information on network operators supporting the EN-DC.

The UE may periodically or dynamically receive information on a new network operator from the base station. Accordingly, the UE may update the database stored in the UE, based on newly received information on network operators.

In an embodiment, when the UE receives the information on the new network operator from the base station, the UE may add the information on the new network operator to the database.

In an embodiment, when information on a network operator that the UE receives from the base station is different from the information on the network operators which is stored in the UE, the UE may update the information on the network operators included in the database, based on the newly received information on the network operators.

In an embodiment, when the UE receives information on a new network operator from the base station, the UE may erase information on existing network operators except for the new network operator which is not included in the database.

The above-described embodiments are merely an example.

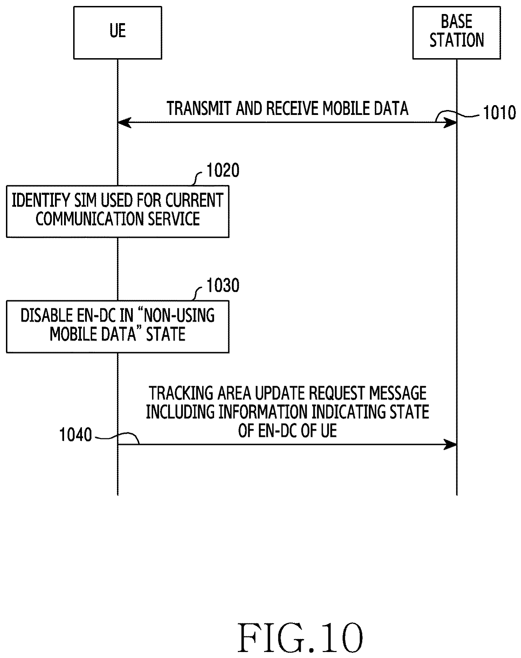

FIG. 10 is a signal flow diagram illustrating an example procedure for updating an EN-DC state of UE according to various embodiments.

Referring to FIG. 10, an update operation of a changed EN-DC state described in FIG. 8 (for example, step 880) when UE uses mobile data will be described in detail. However, an explanation of the same contents as described in FIGS. 7, 8 and 9 may not be repeated here.

At step 1010, a DDS of the UE may transmit and/or receive mobile data to and/or from a base station. For example, the DDS may transmit and/or receive mobile data to and/or from the base station through one transceiver. Accordingly, it may be difficult for a non-DDS of the UE to transmit and receive mobile data to and from the base station through the transceiver.

At step 1020, the UE may identify a current stack. For example, when the SIM used for a current communication service of the UE is a DDS, the UE may transmit and/or receive mobile data as in step 1010. On the other hand, when the SIM used for the current communication service of the UE is a non-DDS, the UE may not transmit and/or receive mobile data. Accordingly, when it is identified that the SIM used for the current communication service is the non-DDS, it may indicate that the UE is connected to a 4G base station. Therefore, the UE may be in a state in which the UE is not able to use mobile data. Accordingly, the UE may perform a procedure for connecting to a 5G base station in order to use mobile data. At step 1030, when it is identified that a specific network operator supports EN-DC based on a database, the UE may disable EN-DC which is in a "non-using mobile data" state. In this case, "non-using mobile data" refers to a case in which UE is not able to use mobile data, and "non-using mobile data" may cause a running SIM to be disabled. For example, when the SIM used for the current communication service is the non-DDS and the UE does not use mobile data, the UE may disable the EN-DC of the UE.

At step 1040, the UE may update the state of the EN-DC feature (or capability) of the UE which is changed through step 1030 for the base station. For example, the UE may transmit, to the base station, information on the state of the EN-DC which is changed when the EN-DC of the UE is disabled through step 1030. In an embodiment, the UE may transmit, to the base station, a message including information indicating that EN-DC is not supported (for example, a TRACKING AREA UPDATE REQUEST message). In an embodiment, information on the state of the EN-DC feature of the UE may be included in UE capability information that the UE transmits to the base station according to a request of the base station for UE capability information (for example, a UE capability enquiry). For example, as information indicating that EN-DC of the UE is not supported, an indicator of 1 bit or more may be used.

The base station may receive the information indicating that EN-DC of the UE is not supported from the UE, and may identify (determine) that the UE does not need to connect to a 5G base station. The base station may not transmit measurement configuration information for a measurement report of the UE to the UE. Accordingly, the UE may not need to measure a 5G cell or to report a result of measurement. In addition, the base station may not transmit 5G SCG configuration information to the UE. However, the base station may transmit information regarding a 5G standalone (SA) cell measurement frequency to the UE, and the UE may connect to a 5G SA base station.

The operations of the UE and the base station described above are merely an example, and some of the above-described operations may be omitted or more than the above-described operations may be combined. In addition, at least one new operation other than the above-described operations may be added and may be organizationally coupled with existing operations.

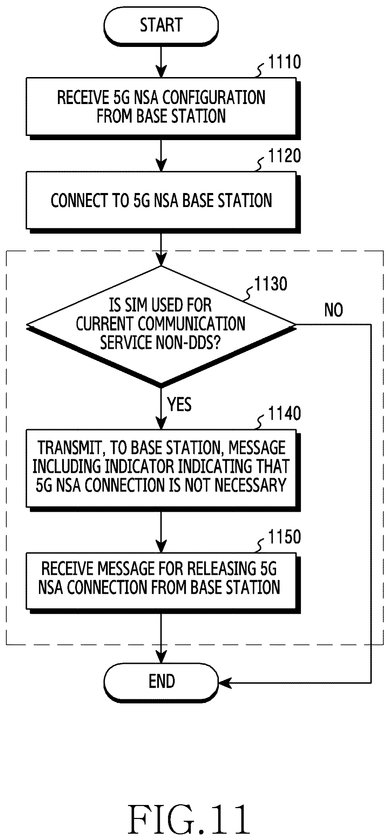

FIG. 11 is a flowchart illustrating an example procedure for controlling EN-DC of UE according to various embodiments.

Referring to FIG. 11, a method for releasing connection with a 5G base station to reduce power consumption of UE when UE is already connected to the 5G base station will be described. For example, when UE is connected to a 5G NSA base station but a SIM used for a current communication service of the UE is a non-DDS and the UE does not use mobile data, the UE may release connection with the 5G NSA base station.

At step 1110, UE may receive configuration information for connecting the UE to a 5G base station (for example, a 5G SCG) from a base station. The configuration information for connecting the UE to the 5G base station may be based on a measurement report of the UE. Prior to step 1110, a measurement report procedure (for example, steps 630 to 650) of FIG. 6 described above may be performed between the UE and the base station.

At step 1120, the UE may perform a procedure for connecting to the 5G base station based on the configuration information of the 5G base station which is received at step 1110. Accordingly, the UE connected to the 5G base station may transmit and/or receive mobile data to and/or from the 5G base station. However, when the UE is already connected to the 5G base station but does not use mobile data unlike the above-described embodiment (for example, FIGS. 7 to 10), the UE may include an operation of releasing connection with the 5G base station.

At step 1130, the UE may identify whether the SIM used for a current communication service is a non-DDS. When the SIM used for the current communication service of the UE is a DDS, the UE may transmit and/or receive mobile data to and/or from the 5G base station, and thus, the UE may not release connection with the 5G base station. On the other hand, when the SIM used for the current communication system of the UE is a non-DDS, the UE does not need to transmit and/or receive mobile data to and/or from the base station, and may not need to maintain connection with the 5G base station. Accordingly, when the SIM used for the current communication service is the non-DDS, the UE may perform subsequent operations for releasing connection with the 5G base station, so that power consumption caused by operation of EN-DC may be reduced. This is because when the UE is connected to the 5G base station, transmission and reception speed of data may be enhanced compared to when the UE is connected only to a 4G base station, but power consumption may increase due to more signaling. In addition, this is because the UE continues measuring neighboring 5G cells and reporting on measurement in order to maintain connection with the 5G base station due to movement of the UE, and thus power consumption increases.

At step 1140, when the SIM used for the current communication service is the non-DDS, the UE may transmit a message including information indicating that 5G NSA connection is not necessary to the base station. In this case, the information indicating that 5G NSA connection is not necessary may include an indicator of 1 bit or more. After informing the base station that 5G NSA connection is not necessary, the UE may not perform operations of measuring neighboring 5G cells and reporting on measurement. Accordingly, power consumption of the UE may be reduced.

At step 1150, the UE may receive a message for releasing 5G NSA connection from the base station. For example, when the base station receives information indicating that 5G NSA connection is not necessary from the UE, the base station may transmit a message for releasing 5G NSA connection (for example, RRCConnectionRelease) with the UE to the UE. The UE may maintain a connection state with a 4G base station even after releasing connection with the 5G base station. Of course, the UE may resume a connection procedure with the 5G base station even if connection with the 5G base station is released. In addition, the UE may perform operations for controlling EN-DC of the UE according to the above-described embodiments (for example, FIGS. 7 to 10).

The operations of the UE and the base station described above are merely an example, and some of the above-described operations may be omitted or more than the above-described operations may be combined. In addition, at least one new operation other than the above-described operations may be added and may be organizationally coupled with existing operations.

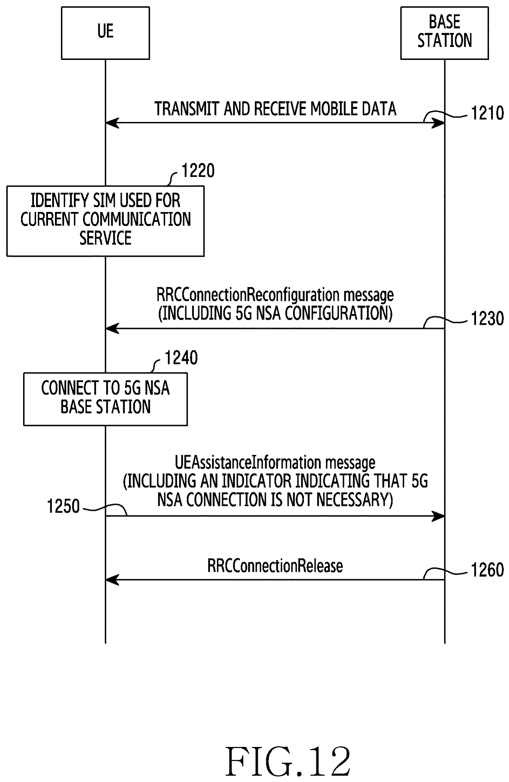

FIG. 12 is a signal flow diagram illustrating example operations between UE and a base station according to various embodiments.

Referring to FIG. 12, a flow of signals in the operation of the UE releasing connection with the 5G base station as described in FIG. 11 will be described. However, an explanation of the same contents as described in FIG. 11 may not be repeated here.

At step 1210, a DDS of UE may transmit and/or receive mobile data to and/or from a base station. For example, the DDS may transmit and/or receive mobile data to and/or from the base station through one transceiver. Accordingly, it may be difficult for a non-DDS of the UE to transmit and receive mobile data to and from the base station through the transceiver.

At step 1220, the UE may identify a current stack. For example, when the SIM used for a current communication service of the UE is a DDS, the UE may transmit and/or receive mobile data as in step 1210. On the other hand, when the SIM used for the current communication service of the UE is a non-DDS, the UE may not transmit and/or receive mobile data. Accordingly, when it is identified that the SIM used for the current communication service is the non-DDS, it may indicate that the UE is connected to a 4G base station. Therefore, the UE may be in a state in which the UE is not able to use mobile data. Accordingly, the UE may perform a procedure for connecting to a 5G base station in order to use mobile data. The base station may transmit measurement configuration information for a measurement report of the UE on a 5G cell to the UE. For example, when the UE does not currently use mobile data, the base station may transmit measurement configuration information to the UE. The UE may perform measurement on a neighboring cell (for example, a 5G cell) based on the measurement configuration information received from the base station. In addition, the UE may perform measurement on a neighboring cell (for example, a 5G cell). For example, the UE may measure signal quality (for example, RSRP, RSRQ) of neighboring cells. The UE may transmit a measurement report including a result of measurement on neighboring cells to the base station. In this case, the measurement report may be caused by an event triggering condition included in the measurement configuration information. For example, when a specific event occurs, the UE may report the result of measurement. In this case, it may be defined which cell each event is targeted at. For example, the measurement report may include signal quality (for example, RSRP, RSRQ) of neighboring cells which is measured by the UE, identifiers of neighboring cells.

At step 1230, the base station may transmit configuration information for connecting the UE to a base station (for example, 5G SCG) to the UE, based on the measurement report received from the UE. For example, the configuration information for connecting the UE to the base station may be included in a RRC connection reconfiguration (for example, RRCConnectionReconfiguration) message.

At step 1240, the UE may perform a procedure for connecting to the 5G base station (camp-on), based on the configuration information of the 5G base station received at step 1230. The procedure for connecting to the 5G base station (for example, steps 1230 to 1230) in FIG. 12 may include the same or similar operations for the same purpose as operations of FIG. 5 described above (for example, steps 510 to 550). In this case, when the SIM used for the current communication service of the UE is the non-DDS, the UE does not need to transmit and/or receive mobile data to and/from the base station, and thus it is not necessary to maintain connection with the 5G base station. Accordingly, when the SIM used for the current communication service is the non-DDS, the UE may perform subsequent operations for releasing connection with the 5G base station, so that power consumption caused by operations of EN-DC may be reduced.

At step 1250, in response to the RRC connection reconfiguration message of step 1230, the UE may transmit a message including information indicating that 5G NSA connection is not necessary to the base station. For example, when the SIM used for the current communication service is the non-DDS, the UE may transmit a message including information indicating that 5G NSA connection is not necessary to the base station. In this case, the information indicating that 5G NSA connection is not necessary may include an indicator of 1 bit or more. The information indicating that 5G NSA connection is not necessary may be included in a UE assistance information (for example, UEAssistanceInformation) message. In addition, the UE assistance information may be a response to the RRC connection reconfiguration information that the UE receives from the base station. After informing the base station that 5G NSA connection is not necessary, the UE may not perform operations of measuring neighboring 5G cells and reporting on measurement. Accordingly, power consumption of the UE may be reduced.

At step 1260, when the base station receives the information indicating that 5G NSA connection is not necessary from the UE, the base station may transmit a message for releasing 5G NSA connection with the UE (for example, RRCConnectionRelease) to the UE. The UE may maintain a connection state with a 4G base station after releasing connection with the 5G base station. Of course, the UE may resume a procedure for connecting to the 5G base station even if connection with the 5G base station is released. In addition, the UE may perform operations for controlling EN-DC of the UE according to the above-described embodiment (for example, FIGS. 7, 8, 9 and 10).

The operations of the UE and the base station described above are merely an example, and some of the above-described operations may be omitted or more than the above-described operations may be combined. In addition, at least one new operation other than the above-described operations may be added and may be organizationally coupled with existing operations.

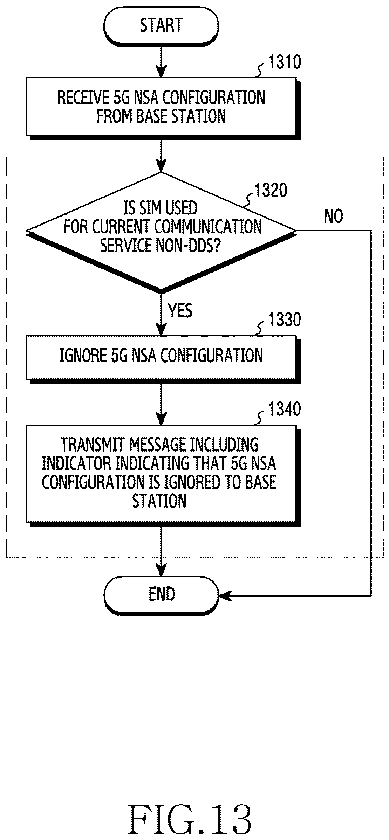

FIG. 13 is a flowchart illustrating an example procedure for controlling EN-DC of UE according to various embodiments.

Referring to FIG. 13, a method for refraining from performing a connection procedure with a 5G base station in order to reduce power consumption of UE when the UE already receives configuration information for connecting to the 5G base station will be described. For example, when UE receives configuration information for connecting to a 5G NSA base station (for example, RRCConnectionReconfiguration) from a base station but a SIM used for a current communication service of the UE is a non-DDS and the UE does not use mobile data, the UE may not perform a procedure for connecting to a 5G NSA base station.

At step 1310, UE may receive configuration information for connecting the UE to a 5G base station (for example, a 5G SCG) from a base station. The configuration information for connecting the UE to the 5G base station may be based on a measurement report of the UE. Prior to step 1310, a measurement report procedure (for example, steps 630 to 650) of FIG. 6 described above may be performed between the UE and the base station.

At step 1320, the UE may identify whether the SIM used for a current communication service is a non-DDS. When the SIM used for the current communication service of the UE is a DDS, the UE may transmit and/or receive mobile data to and/or from the 5G base station, and thus, the UE may not release connection with the 5G base station. On the other hand, when the SIM used for the current communication system of the UE is a non-DDS, the UE does not need to transmit and/or receive mobile data to and/or from the base station, and may not need to maintain connection with the 5G base station. Accordingly, when the SIM used for the current communication service is the non-DDS, the UE may perform subsequent operations for releasing connection with the 5G base station, so that power consumption caused by operation of EN-DC may be reduced. This is because when the UE is connected to the 5G base station, transmission and reception speed of data may be enhanced compared to when the UE is connected only to a 4G base station, but power consumption may increase due to more signaling. In addition, this is because the UE continues measuring neighboring 5G cells and reporting on measurement in order to maintain connection with the 5G base station due to movement of the UE, and thus power consumption increases.

At step 1330, when the SIM used for the current communication service is the non-DDS, the UE may ignore (or discard) the configuration information received from the base station at step 1310. For example, when the SIM used for the current communication service is the non-DDS, 5G NSA connection is not necessary and thus the UE may ignore the configuration information for connecting to the 5G base station, received from the base station at step 1320. The UE may not perform a procedure for connecting to the 5G base station based on the configuration information. Accordingly, the UE may reduce power consumption which may be caused by the procedure for connecting to the 5G base station.

At step 1340, the UE may transmit a message including information indicating that the configuration for connecting to the 5G base station is ignored to the base station. In this case, the information indicating that the configuration for connecting to the 5G base station is ignored may include an indicator of 1 bit or more. The UE may not perform a procedure for connecting to the 5G base station. Accordingly, the UE may prevent and/or reduce consumption of power which is necessary for performing a procedure for connecting to the 5G base station. Of course, the UE may maintain a connection state with a 4G base station even when the connection with the 5G base station is not performed. Of course, the UE may resume a connection procedure with the 5G base station even if connection with the 5G base station is not performed. In addition, the UE may perform operations for controlling EN-DC of the UE according to the above-described embodiment (for example, FIGS. 7 to 10).

The operations of the UE and the base station described above are merely an example, and some of the above-described operations may be omitted or more than the above-described operations may be combined. In addition, at least one new operation other than the above-described operations may be added and may be organizationally coupled with existing operations.

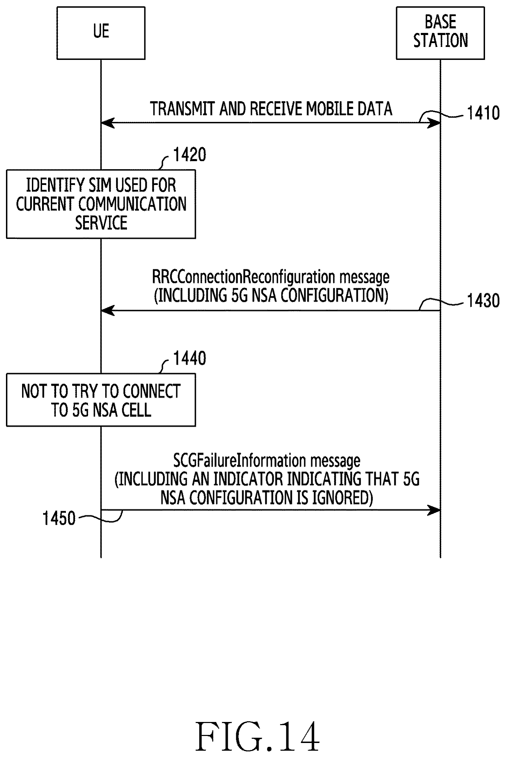

FIG. 14 is a signal flow diagram illustrating example operations between UE and a base station according to various embodiments.

Referring to FIG. 14, an example sequence of operations between UE and a base station according to various embodiments of the disclosure is illustrated.

Referring to FIG. 14, a method for refraining from performing a connection procedure with a 5G base station in order to reduce power consumption of UE when the UE already receives configuration information for connecting to the 5G base station will be described. For example, when UE receives configuration information for connecting to a 5G NSA base station (for example, RRCConnectionReconfiguration) from a base station but a SIM used for a current communication service of the UE is a non-DDS and the UE does not use mobile data, the UE may not perform a procedure for connecting to a 5G NSA base station.

At step 1410, a DDS of UE may transmit and/or receive mobile data to and/or from a base station. For example, the DDS may transmit and/or receive mobile data to and/or from the base station through one transceiver. Accordingly, it may be difficult for a non-DDS of the UE to transmit and receive mobile data to and from the base station through the transceiver.

At step 1420, the UE may identify a current stack. For example, when the SIM used for a current communication service of the UE is a DDS, the UE may transmit and/or receive mobile data as in step 1210. On the other hand, when the SIM used for the current communication service of the UE is a non-DDS, the UE may not transmit and/or receive mobile data. Accordingly, when it is identified that the SIM used for the current communication service is the non-DDS, it may indicate that the UE is connected to a 4G base station. Therefore, the UE may be in a state in which the UE is not able to use mobile data. Accordingly, the UE may perform a procedure for connecting to a 5G base station in order to use mobile data. The base station may transmit measurement configuration information for a measurement report of the UE on a 5G cell to the UE. For example, when the UE does not currently use mobile data, the base station may transmit measurement configuration information to the UE. The UE may perform measurement on a neighboring cell (for example, a 5G cell) based on the measurement configuration information received from the base station. In addition, the UE may perform measurement on a neighboring cell (for example, a 5G cell). For example, the UE may measure signal quality (for example, RSRP, RSRQ) of neighboring cells. The UE may transmit a measurement report including a result of measurement on neighboring cells to the base station. In this case, the measurement report may be caused by an event triggering condition included in the measurement configuration information. For example, when a specific event occurs, the UE may report the result of measurement. In this case, it may be defined which cell each event is targeted at. For example, the measurement report may include signal quality (for example, RSRP, RSRQ) of neighboring cells which is measured by the UE, identifiers of neighboring cells.

At step 1430, the base station may transmit configuration information for connecting the UE to a base station (for example, 5G SCG) to the UE, based on the measurement report received from the UE. For example, the configuration information for connecting the UE to the base station may be included in a RRC connection reconfiguration (for example, RRCConnectionReconfiguration) message.

At step 1440, when the SIM used for the current communication service is the non-DDS, the UE may ignore (or discard) the configuration information received from the base station at step 1430. For example, when the SIM used for the current communication service is the non-DDS, 5G NSA connection is not necessary and thus the UE may ignore the configuration information for connecting to the 5G base station, received from the base station at step 1430. The UE may not perform a procedure for connecting to the 5G base station based on the configuration information. Accordingly, the UE may reduce power consumption which may be caused by the procedure for connecting to the 5G base station.

At step 1450, the UE may transmit SCG failure information (for example, SCGFailureInformation) to the base station in response to the RRC connection reconfiguration message of step 1430. In this case, the SCG failure information may include information indicating that the configuration for connecting to the 5G base station is ignored. The information indicating that the configuration for connecting to the 5G base station is ignored may include an indicator of 1 bit or more. The 5G base station may not perform a procedure for connecting to the UE. Accordingly, the UE may prevent/reduce consumption of power which is necessary for performing a procedure for connecting to the 5G base station. The UE may maintain a connection state with a 4G base station even when the connection with the 5G base station is not performed. Of course, the UE may resume a connection procedure with the 5G base station even if connection with the 5G base station is not performed. In addition, the UE may perform operations for controlling EN-DC of the UE according to the above-described embodiment (for example, FIGS. 7 to 10).

The operations of the UE and the base station described above are merely an example, and some of the above-described operations may be omitted or more than the above-described operations may be combined. In addition, at least one new operation other than the above-described operations may be added and may be organizationally coupled with existing operations.

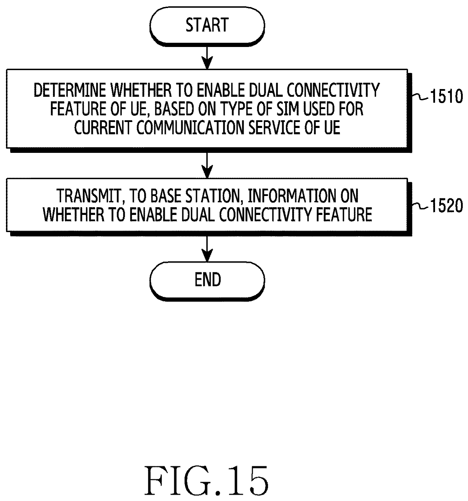

FIG. 15 is a flowchart illustrating example operations of UE according to various embodiments.

Referring to FIG. 15, a method for controlling EN-DC of UE will be described.

At step 1510, when a mobile state of UE is changed, the UE may determine whether to enable dual connectivity of UE based on a type of a SIM used for a current communication service. More specifically, the UE may identify (or determine) whether the mobile state of the UE is changed. For example, the UE may identify whether a use state of mobile data of the UE is changed or a DDS is changed. In this case, when the use of mobile data of UE is initiated or the DDS is changed, it is identified when the SIM used for a current communication service of the UE is a DDS. For example, the UE may identify whether a running SIM is a DDS or a non-DDS. When the SIM used for the current communication service of the UE is the DDS, the UE may identify whether EN-DC of the UE is in a disabled state due to "non-using mobile data". In this case, "non-using mobile data" refers to a case in which mobile data cannot be used by UE, and may cause a running SIM to be disabled. For example, although the SIM used for the current communication service of the UE is the DDS, the UE does not use mobile data and may identify whether EN-DC of the UE is in a disabled state. In addition, when the EN-DC of the UE is in the disabled state, the UE may enable the EN-DC of the UE. Accordingly, the UE may perform EN-DC to connect to a 5G base station. Alternatively, when the mobile state of the UE is not changed or the SIM used for the current communication service of the UE is the non-DDS, the UE may identify whether a specific network operator is able to support EN-DC based on a stored database. For example, the UE may identify whether it is possible to connect to any one network (for example, a 5G base station) included in the database, based on information on at least one network operator supporting EN-DC. When it is identified that the specific network operator supports EN-DC, based on the database, the UE may disable EN-DC in the "non-using mobile data" state. For example, when the SIM used for the current communication service is the non-DDS and the UE does not use mobile data, the UE may disable EN-DC of the UE. Accordingly, the UE may not receive measurement configuration information for performing a measurement report on a 5G cell from the base station. Alternatively, the UE may not perform a subsequent procedure (for example, a measurement report) for connecting to the 5G base station even when receiving measurement configuration information for performing a measurement report on a 5G cell from the base station.

At step 1520, the UE may update the state of the EN-DC feature (or capability) of the UE which is changed through step 1510 for the base station. For example, when the EN-DC of the UE is disabled or enabled, the UE may transmit, to the base station, information on the changed state of EN-DC. In an embodiment, the information on the state of the EN-DC feature of the UE may be included in UE capability information that the UE transmits to the base station according to a request of the base station for UE capability information (for example, a UE capability enquiry). Accordingly, the base station may determine whether to perform procedures for connecting the UE to the 5G base station, based on the changed EN-DC state of the UE. For example, when the EN-DC of the UE is disabled, the base station may identify (determine) that the UE does not need to connect to the 5G base station, and may not transmit measurement configuration information for a measurement report of the UE to the UE. Alternatively, when the EN-DC of the UE is enabled, the base station may identify (determine) that the UE needs to connect to the 5G base station, and may transmit measurement configuration information for a measurement report of the UE to the UE.

The operations of the UE and the base station described above may include the same or similar operations for the same purpose as in FIG. 7 or 8, and a redundant explanation may not be repeated here.

According to various example embodiments of the disclosure, there is provided a method of a terminal including a plurality of subscriber identification modules (SIMs) in a wireless communication system, the method including: based on a type of a SIM used for a current communication service of the terminal, determining whether to enable a dual connectivity feature of the terminal; and transmitting information on whether to enable the dual connectivity feature to a base station, wherein the terminal and the base station support the dual connectivity feature, wherein the plurality of SIMs include a first SIM and a second SIM, and the first SIM and the second SIM include different subscription information.

According to an example embodiment, the method may further include, based on use of mobile data of the terminal being initiated and the SIM used for the current communication service is the first SIM, enabling the dual connectivity feature for transmitting and receiving the mobile data to and from the base station using the first SIM.

According to an example embodiment, the method may further include: receiving first information on at least one first network from the base station; based on use of mobile data of the terminal being terminated or the SIM used for the current communication service being the second SIM, identifying a network supporting the dual connectivity feature among the at least one first network, based on the first information; and, based on the network being identified, disabling the dual connectivity feature.

According to an example embodiment, the method may further include: receiving second information on at least one second network from the base station; and updating the first information based on the second information.

According to an example embodiment, the first information may include at least one of an operator of each of the at least one first network, a public land mobile network (PLMN), or information on whether the dual connectivity feature is supported, the second information may include at least one of an operator of each of the at least one second network, a PLMN, or information on whether the dual connectivity feature is supported, and information on a network that is not included in the at least one second network may be removed from the first information.

According to an example embodiment, the method may further include: receiving radio resource control (RRC) reconfiguration information for the dual connectivity from the base station; and, based on the SIM used for the current communication service being the second SIM, transmitting first information indicating that the RRC reconfiguration information is ignored to the base station.

According to an example embodiment, the method may further include: based on the RRC reconfiguration information, connecting to the base station; and, based on the SIM used for the communication service being the second SIM, transmitting second information indicating that connection with the base station is not necessary to the base station.

According to an example embodiment, the first information may be included in secondary cell group (SCG) failure information in response to the RRC reconfiguration information, the second information may be included in terminal assistance information in response to the RRC reconfiguration information, and the first information and the second information may be transmitted in a form of an indicator of 1 bit, respectively.

According to an example embodiment, the first SIM may include a default data SIM (DDS) used for at least one service of transmission and reception of mobile data to and from the base station, a voice call, or a short message service (SMS), and the second SIM may include a non-DDS used for at least one service of the base station, the voice call or the SMS.

According to an example embodiment, the dual connectivity feature may comprise an evolved universal mobile telecommunications system (UMTS) terrestrial radio access (E-UTRA)-new radio (NR) dual connectivity (ENDC) feature.

According to various example embodiments, there is provided a terminal including a plurality of subscriber identification modules (SIMs) in a wireless communication system, the terminal including: a transceiver; a first SIM; a second SIM; and at least one processor, comprising processing circuitry, coupled with the transceiver, the first SIM, and the second SIM, wherein at least one processor, individually and/or collectively, is configured to: based on a type of a SIM used for a current communication service of the terminal, determine whether to enable a dual connectivity feature of the terminal; and control the terminal to transmit information on whether to enable the dual connectivity feature to a base station, wherein the terminal and the base station support the dual connectivity feature, wherein the plurality of SIMs include the first SIM and the second SIM, and the first SIM and the second SIM include different subscription information.

According to an example embodiment, based on use of mobile data of the terminal being initiated and the SIM used for the current communication service being the first SIM, at least one processor, individually and/or collectively, may be configured to enable the dual connectivity feature for transmitting and receiving the mobile data to and from the base station using the first SIM.

According not an example embodiment, at least one processor, individually and/or collectively, may be configured to: receive first information on at least one first network from the base station, based on use of mobile data of the terminal being terminated or the SIM used for the current communication service being the second SIM, identify a network supporting the dual connectivity feature among the at least one first network, based on the first information, and based on the network being identified, disable the dual connectivity feature.

According to an example embodiment, at least one processor, individually and/or collectively, may be configured to receive second information on at least one second network from the base station, and may update the first information based on the second information.

According to an example embodiment, the first information may include at least one of an operator of each of the at least one first network, a public land mobile network (PLMN), or information on whether the dual connectivity feature is supported, the second information may include at least one of an operator of each of the at least one second network, a PLMN, or information on whether the dual connectivity feature is supported, and information on a network that is not included in the at least one second network may be removed from the first information.

According to an example embodiment, at least one processor, individually and/or collectively, may be configured to: receive radio resource control (RRC) reconfiguration information for the dual connectivity from the base station, and, based on the SIM used for the current communication service being the second SIM, control the terminal to transmit first information indicating that the RRC reconfiguration information is ignored to the base station.

According to an example embodiment, based on the RRC reconfiguration information, least one processor, individually and/or collectively, may be configured to: connect to the base station, and, based on the SIM used for the communication service being the second SIM, control the terminal to transmit second information indicating that connection with the base station is not necessary to the base station.

According to an example embodiment, the first information may be included in secondary cell group (SCG) failure information in response to the RRC reconfiguration information, the second information may be included in terminal assistance information in response to the RRC reconfiguration information, and the first information and the second information may be transmitted in a form of an indicator of 1 bit, respectively.

According to an example embodiment, the first SIM may include a default data SIM (DDS) used for at least one service of transmission and reception of mobile data to and from the base station, a voice call, or a short message service (SMS), and the second SIM may include a non-DDS used for at least one service of the base station, the voice call or the SMS.

According to an example embodiment, the dual connectivity feature may include an evolved universal mobile telecommunications system (UMTS) terrestrial radio access (E-UTRA)-new radio (NR) dual connectivity (ENDC) feature.

It should be noted that the above-described configuration diagrams, diagrams of control/data signal transmission methods, operation procedure diagrams, configuration diagrams are not intended to limit the scope of the disclosure. For example, all units, entities, or steps of operations described in embodiments of the disclosure should not be interpreted as essential components for embodying the disclosure, and, even if only some components are included, they may be implemented within the range without departing from the essence of the disclosure. In addition, respective embodiments may be operated in combination with one another if necessary. For example, some of the methods of the disclosure may be combined to operate a network entity and UE.

The operations of the base station and the UE described above may be implemented by including a memory device storing a corresponding program code in a certain unit in the base station or the UE. That is, a control unit of a base station or UE device may read out a program code stored in a memory device using a processor or a central processing unit (CPU), and execute the program code, thereby performing the above-described operations.

Various units, modules of an entity, a base station or a UE device described in the disclosure may operate using a hardware circuit, for example, a complementary metal oxide semiconductor-based logic circuit, a hardware circuit such as a combination of firmware, software and/or hardware and firmware and/or software inserted into a machine readable medium. For example, various electrical structures and methods may be implemented using transistors, logic gates, electrical circuits such as application specific integrated circuits.

When implemented in software, a computer readable storage medium for storing one or more programs (software modules) may be provided. The one or more programs stored in the computer readable storage medium are configured for execution performed by one or more processors in an electronic device. The one or more programs include instructions for allowing the electronic device to execute the methods based on the claims or the various embodiments disclosed in the disclosure.

The program (the software module or software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, and a magnetic cassette. Alternatively, the program may be stored in a memory configured in combination of all or some of these storage media. In addition, the configured memory may be plural in number.

Further, the program may be stored in an attachable storage device capable of accessing the electronic device through a communication network such as the Internet, an Intranet, a local area network (LAN), a wide LAN (WLAN), or a storage area network (SAN) or a communication network configured by combining the networks. The storage device may access via an external port to a device which performs embodiments of the disclosure. In addition, an additional storage device on a communication network may access to a device which performs embodiments of the disclosure.

In the above-described specific embodiments of the disclosure, elements included in the disclosure are expressed in singular or plural forms according to specific embodiments. However, singular or plural forms are appropriately selected according to suggested situations for convenience of explanation, and the disclosure is not limited to a single element or plural elements. An element which is expressed in a plural form may be configured in a singular form or an element which is expressed in a singular form may be configured in plural number.

While the disclosure has been shown and described with reference to certain example embodiments thereof, it will be understood by those skilled in the art that various changes in form and detail may be made without departing from the spirit and scope of the disclosure, including the appended claims and their equivalents. In addition, the above-described respective embodiments may be combined with one another and operated if necessary. For example, some of the methods of the disclosure may be combined with one another to operate a base station and UE. The above-described embodiments are disclosed with reference to 5G, NR systems, but other variations based on the technical concept of the above-described embodiments are possible in other systems such as LTE, LTE-A, LTE-A-Pro systems.

## Claims

1. A method performed by a terminal comprising a plurality of subscriber identification modules (SIMs) in a wireless communication system, the method comprising:
based on a type of a SIM used for a current communication service of the terminal, determining whether to enable a dual connectivity feature of the terminal; and
transmitting information on whether to enable the dual connectivity feature to a base station,
wherein the terminal and the base station are configured to support the dual connectivity feature,
wherein the plurality of SIMs comprise a first SIM and a second SIM, and the first SIM and the second SIM comprise different subscription information.

2. 3 The method of claim 1, further comprising, based on use of mobile data of the terminal being initiated and the SIM used for the current communication service being the first SIM, enabling the dual connectivity feature for transmitting and receiving the mobile data to and from the base station using the first SIM.

3. The method of claim 1, further comprising:
receiving first information on at least one first network from the base station;
based on use of mobile data of the terminal being terminated or the SIM used for the current communication service being the second SIM, identifying a network supporting the dual connectivity feature among the at least one first network, based on the first information; and
based on the network being identified, disabling the dual connectivity feature.

4. The method of claim 3, further comprising:
receiving second information on at least one second network from the base station; and
updating the first information based on the second information.

5. The method of claim 4, wherein the first information comprises at least one of an operator of each of the at least one first network, a public land mobile network (PLMN), or information on whether the dual connectivity feature is supported,
wherein the second information comprises at least one of an operator of each of the at least one second network, a PLMN, or information on whether the dual connectivity feature is supported, and
wherein information on a network not included in the at least one second network is removed from the first information.

6. The method of claim 1, further comprising:
receiving radio resource control (RRC) reconfiguration information for the dual connectivity from the base station; and
based on the SIM used for the current communication service being the second SIM, transmitting first information indicating that the RRC reconfiguration information is ignored to the base station.

7. The method of claim 6, further comprising:
based on the RRC reconfiguration information, connecting to the base station; and
based on the SIM used for the communication service being the second SIM, transmitting second information indicating that connection with the base station is not necessary to the base station.

8. The method of claim 7, wherein the first information is included in secondary cell group (SCG) failure information in response to the RRC reconfiguration information,
wherein the second information is included in terminal assistance information in response to the RRC reconfiguration information, and
wherein the first information and the second information are transmitted in a form of an indicator of 1 bit, respectively.

9. A terminal comprising a plurality of subscriber identification modules (SIMs) in a wireless communication system, the terminal comprising:
a transceiver;
a first SIM;
a second SIM; and
at least one processor, comprising processing circuitry, coupled with the transceiver, the first SIM, and the second SIM,
wherein at least one processor, individually and/or collectively, is configured to:
based on a type of a SIM used for a current communication service of the terminal, determine whether to enable a dual connectivity feature of the terminal; and
control the terminal to transmit information on whether to enable the dual connectivity feature to a base station,
wherein the terminal and the base station are configured to support the dual connectivity feature,
wherein the plurality of SIMs comprise the first SIM and the second SIM, and the first SIM and the second SIM comprise different subscription information.

10. The terminal of claim 9, wherein at least one processor, individually and/or collectively is configured to, based on use of mobile data of the terminal being initiated and the SIM used for the current communication service being the first SIM, enable the dual connectivity feature for transmitting and receiving the mobile data to and from the base station using the first SIM.

11. The terminal of claim 9, wherein at least one processor, individually and/or collectively, is configured to:
receive first information on at least one first network from the base station;
based on use of mobile data of the terminal being terminated or the SIM used for the current communication service being the second SIM, identify a network supporting the dual connectivity feature among the at least one first network, based on the first information; and
based on the network being identified, disable the dual connectivity feature.

12. The terminal of claim 11, wherein at least one processor, individually and/or collectively, is configured to:
receive second information on at least one second network from the base station; and
update the first information based on the second information.

13. terminal of claim 12, wherein the first information comprises at least one of an operator of each of the at least one first network, a public land mobile network (PLMN), or information on whether the dual connectivity feature is supported,
wherein the second information comprises at least one of an operator of each of the at least one second network, a PLMN, or information on whether the dual connectivity feature is supported, and
wherein information on a network that is not included in the at least one second network is removed from the first information.

14. The terminal of claim 9, wherein at least one processor, individually and/or collectively, is configured to:
receive radio resource control (RRC) reconfiguration information for the dual connectivity from the base station; and
based on the SIM used for the current communication service being the second SIM, control the terminal to transmit first information indicating that the RRC reconfiguration information is ignored to the base station.

15. The terminal of claim 14, wherein least one processor, individually and/or collectively, is configured to:
based on the RRC reconfiguration information, connect to the base station; and based on the SIM used for the communication service being the second SIM, transmit second information indicating that connection with the base station is not necessary to the base station.
